Europäisches Patentamt

European Patent Office

Office européen des brevets

(11) Publication number: **0 272 715**
**A1**

# (12) EUROPEAN PATENT APPLICATION

(21) Application number: 87202200.9

(22) Date of filing: 11.11.87

(51) Int. Cl.⁴ **H04M 1/02** , H04M 1/23

(30) Priority: 13.11.86 NL 8602886

(43) Date of publication of application:
**29.06.88 Bulletin 88/26**

(84) Designated Contracting States:
**AT BE CH DE ES FR GB GR IT LI LU NL SE**

(71) Applicant: **ALCATEL NEDERLAND B.V.**
**Platinaweg 10 P.O. Box 40840**
**NL-2504 LV The Hague(NL)**

(72) Inventor: **Hoste, Hans Peter**
**Willem III straat 117**
**NL-2552 NB The Hague(NL)**

(74) Representative: **Pothet, Jean Rémy Emile**
**Ludovic et al**
**c/o SOSPI 14-16 rue de la Baume**
**F-75008 Paris(FR)**

(54) **Subscriber apparatus.**

(57) Telephone subscriber apparatus provided with a box-shaped housing (1) having an in general rectangular base, four upright side faces, and a top face which is shaped in such a way that the hand microtelephone (2) fits onto said top face in a position parallel and near to the side faces, whereby the receiver switch is depressed. The housing is further provided with a rectangular dialling keypad (3) which is fixed by suitable fixing means in a square recess (4) provided for the purpose in the top face of the housing. The fixing means are designed in such a way that the keypad can be fixed as desired by the user with the rows of keys parallel to the hand microtelephone, or perpendicular thereto.

fig - 4

## Subscriber apparatus.

The invention relates to a subscriber apparatus provided with a box-shaped housing having an in general rectangular base, four upright side faces, and a top face which is shaped in such a way that the hand microtelephone fits onto said top face in a position parallel and near to one of the side faces, whereby the receiver switch is depressed, said housing being further provided with a rectangular dialling keypad which is fixed by suitable fixing means in a recess provided for the purpose in the top face of the housing.

Such subscriber apparatus are generally known. In many types the user can decide prior to delivery and installation, according to personal preference, whether the rows of keys should be parallel to the hand set or perpendicular thereto. Depending on this choice, the desired configuration is then either selected from the range of possible variants, or the dialling keypad is fitted in the corresponding manner during the production process.

In practice, a choice which has been made does not always prove later to be the right one. Either the original user subsequently prefers another arrangement, or the apparatus goes to another user with different requirements. This change in preference could hitherto be met only be exchanging the apparatus for a different one with the desired configuration.

The object of the invention is to design a subscriber apparatus in such a way that the user can change the configuration himself if he wishes.

In line with this object, provision is now made for a subscriber apparatus of the type referred to in the preamble which, according to the invention is characterized in that the dialling keypad fits into a square recess in the top face of the housing, and the fixing means are designed in such a way that the keypad can be fixed as desired by the user with the rows of keys parallel to the hand set, or perpendicular thereto.

The user thus has the possibility of detaching the dialling keypad by undoing the fixing means, turning it one quarter turn, and then replacing it in the recess in the housing.

It is possible within the scope of the invention to provide a fixed connection, consisting of a flexible multicore cable, between the dialling keypad and the telephone circuitry accommodated in the housing. However, the use of such fixed cables can have disadvantages. When the position of the keypad is changed, the possibility cannot always be ruled out that this cable will be heavily twisted, or that it will be pulled hard, with every chance of damage to the cable or its connections.

These disadvantages can be at least partially eliminated through inserting a connector in the cable connection or making the cable connection end in a connector at one end at least.

It is therefore preferable for the connection between the keypad and the telephone circuitry accommodated in the housing to be made by means of a male or female connector which is fixed on the keypad and can mate with at least two corresponding, electrically interconnected female or male connectors respectively placed inside the said square recess, at such points that one of the said at least two connectors makes contact with the first mentioned connector.

A similar embodiment is characterized in that the connection between the keypad and the telephone circuitry accommodated in the housing is accomplished by means of a male or female connector which is placed in the recess in the housing and can mate with at least two corresponding, electrically interconnected female respectively male connectors fixed to this keypad at such points that one of said at least two connectors makes contact with the first mentioned connector.

In both preferred embodiments the keypad can be turned through 90 degrees, in other words, it can either be fixed in a position in which the rows of keys run parallel to the hand microtelephone, or in a position in which the rows of keys run at right angles to the hand microtelephone.

A fully universal character is obtained if the subscriber apparatus is characterized in that the connection between the keypad and the telephone circuitry accommodated in the housing is accomplished by means of two electrically interconnected male or female connectors which are placed near two diametrically opposite corners of the keypad and which can mate with two corresponding electrically interconnected female respectively male connectors placed near two adjacent corners of the said square recess.

A similar embodiment is characterized in that the connection between the keypad and the telephone circuitry accommodated in the housing is accomplished by means of two electrically interconnected male or female connectors which are placed near two diametrically opposite corners of the square recess, and which can mate with two corresponding electrically interconnected female respectively male connectors placed near two adjacent corners of the keypad.

In the last mentioned two embodiments it is possible to place the keypad in any of the four possible positions in the apparatus, which makes the apparatus adaptable both for the left-handed and for right-handed people in any desired configuration to suit personal tastes.

The invention will be explained in greater detail below with reference to the examples of embodiments shown in the Figures.

Fig. 1 shows a telephone subscriber apparatus with keypad, in which the rows of keys are perpendicular to the hand microtelephone.

Fig. 2 shows a telephone subscriber apparatus with keypad, in which the rows of keys run parallel to the hand microtelephone.

Fig. 3 shows a telephone subscriber apparatus without hand microtelephone, so that the receiver switch is visible.

Fig. 4 shows schematically the telephone subscriber apparatus from which the keypad is removed to illustrate the way in which the connection is achieved between the keypad and the subscriber apparatus.

Fig. 5 shows a cross section through Fig. 4.

Fig. 6 shows a bottom view of the apparatus.

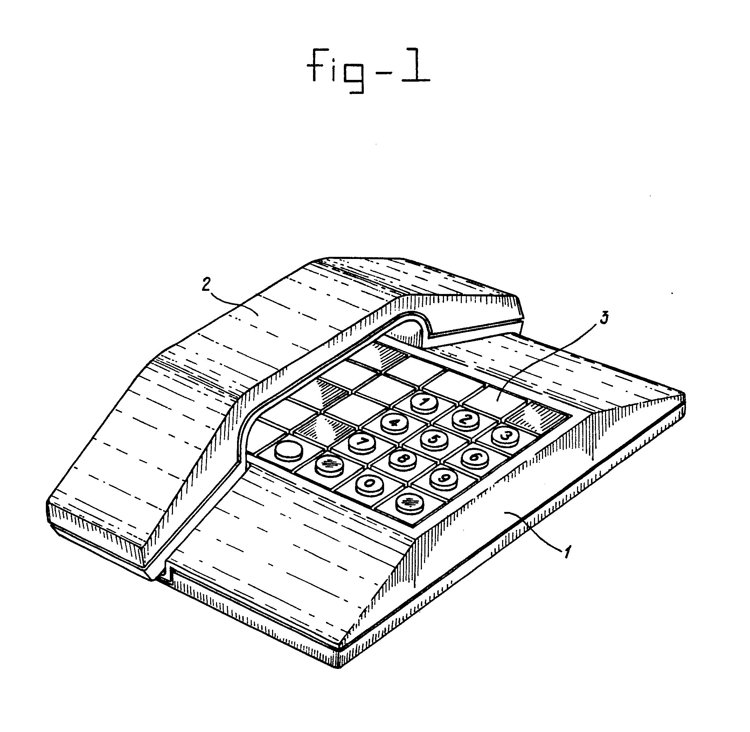

Fig. 1 shows a telephone subscriber apparatus provided with an in general box-shaped housing 1, comprising a dialling keypad and a hand microtelephone 2, which is connected by means of a cable (not shown) to the telephone circuitry in the housing 1. In the configuration below, the rows of keys of the keypad run perpendicular to the hand microtelephone placed at the lefthand side of the apparatus (viewed from the standpoint of the user).

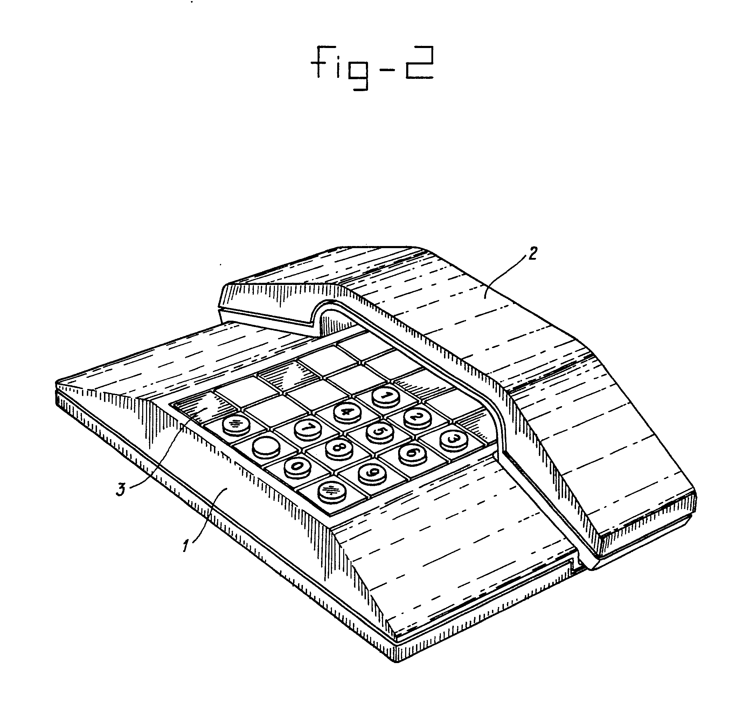

Fig. 2 shows a similar telephone apparatus, provided with the same housing 1, and the same hand microtelephone 2 connected to the circuitry in the housing, but this time with a keypad whose rows of keys run parallel to the hand microtelephone. Viewed from the standpoint of the user, the hand microtelephone is at the back of the unit in this configuration.

Using the hitherto known production methods, the two configurations shown in Figs. 1 and 2 each have to be made separately, on the understanding that at least the keypad has to be fitted as desired in one or other of the positions during the production process. Subsequent changing of the position of the keypad in such telephone subscriber apparatusses is impossible. On the other hand, there is in practice often a desire to be able to change the position of the keypad.

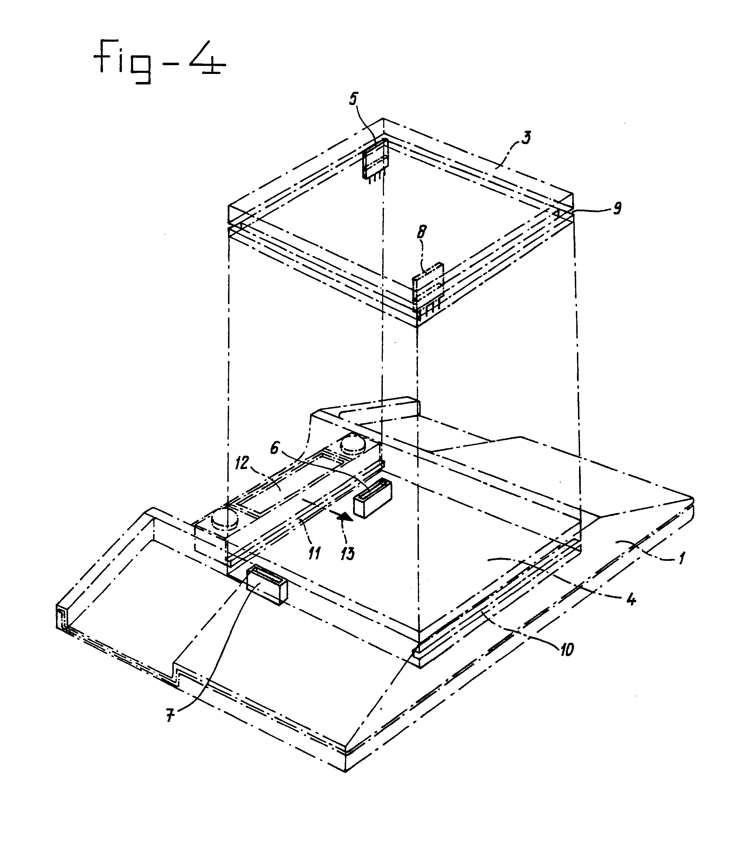

Fig. 4 now shows in what way and with what means the keypad can be fitted in the housing to permit the user to change the position of the keypad subsequently in a simple way, without the necessity for any radical interference with the construction of the apparatus of the electrical wiring.

As shown in Fig. 4, the keypad is made as a separate component, indicated by the reference number 3 in Fig. 4, which fits into a recess 4 in the housing 1. For the sake of clarity, the keys of the keypad 3 are not shown individually in Fig. 4. What is shown is that the keypad 3 is provided with a male connector 5 which has an adequate number of connector pins to permit connection of all keys in the correct manner to the circuitry of the unit in the housing. The housing 1 is provided with two female connectors 6 and 7, intended for mating with the male connector 5.

If the keypad is inserted in the housing 1 in the position shown in Fig. 4, the male connector 5 will be connected to the female connector 6, establishing thereby the connection between the keys of the keypad 3 and the circuitry in the housing 1. The rows of keys are in that configuration for example perpendicular to the hand microtelephone in the manner shown in Fig. 1.

If, however, as shown in Fig. 4, the keypad 3 is turned anti-clockwise through 90 degrees, and the keypad 3 is then inserted into the recess 4 of the housing 1, then the male connector 5 will mate with the female connector 7, establishing thereby the connection between the keys of the keypad 3 and the circuitry inside the housing 1. In this configuration the rows of keys of the keypad 3 will run parallel to the hand microtelephone 2 in the manner illustrated in Fig. 2.

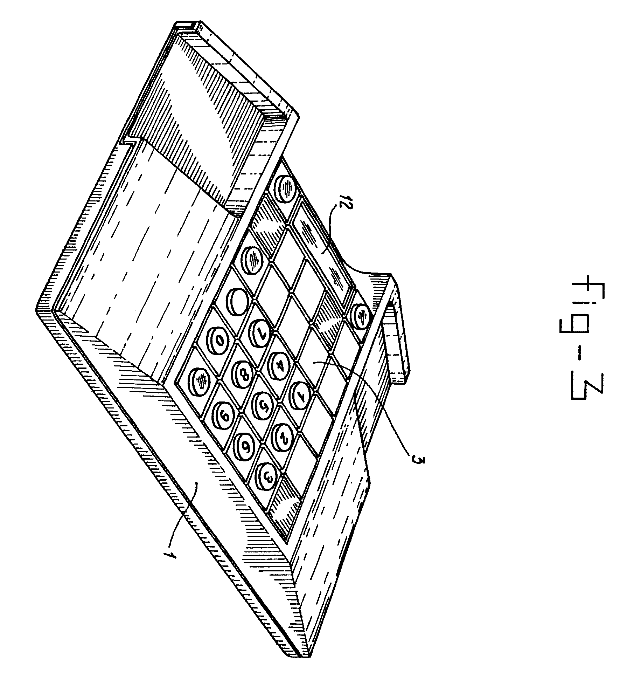

Although these two configurations can meet most requirements, it does happen, for example in the case of lefthanded people, that the positoin of the hand microtelephone is wanted on the righthand side of the apparatus, instead of on the lefthand side, as shown in Fig. 1. Such a possibility can be offered by adding the male connector 8 to the keypad 3, said male connector 8 being connected parallel to the male connector 5. By turning the keypad 3 through 180 degrees relative to the situation shown in Fig. 3, and then insertig the keypad 3 into the recess 4 in the housing 1, the male connector 8 will be connected to the female connector 6. In this way, the connection is made between the keys of the keypad 3 and the telephone circuitry in the housing 1, with the rows of keys being perpendicular to the hand microtelephone 2, but in a configuration which is a mirror image of that in Fig. 1. In the final configuration, the hand microtelephone 2 will be on the righthand side of the keypad, viewed from the standpoint of the user.

By means of this additional male connector 8, another - albeit probably less commonly required - configuration is possible, namely a configuration which is comparable to that of Fig. 2, but in which the hand microtelephone is at the front of the appratus, viewed from the standpoint of the suer.

If the use of a larger number of male connectors, only two of which are being used, is considered a disadvantage, a flexible calble connection can, of course, also be used between the keypad 3 and circuitry in the housing 1. In order to facilitate assembly and to prevent the occurrence of too much strain on the cable, it is preferable that a connector assembly should be accommodated in the cable connection. A cable fixed to the keypad and connected by means of a connector assembly to the circuitry in the housing 1 is suitable.

Although Fig. 4 shows a configuration with a single male connector (5) disposed near a corner of the keypad and two female connectors disposed near two adjacent corners of the recess 4 in the housing 1, it will be clear that the opposite solution, namely a male connector near a corner of the recess 4 in the housing 1 and two female connectors near two adjacent corners of the keypad 3, leads to the same scale of possibilities. The same applies to keypads, where two male connectors (5 and 8) are used at diametrically opposite positions, mating with two female connectors disposed at adjacent corners. For such a situation it is also possible for two male connectors near opposite corners of the recess 4 to mate with two female connectors near adjacent corners of the keypad 3.

Nor is the positioning of the male connectors limited to a place near one of the corners of the keypad 3 or the recess 4. It will be clear that any place along the particular side edge can be selected, provided that the female connectors are on a corresponding place. The configuration near the corner points has, however, been chosen deliberately on account of the preferred embodiment of the mans by which the keypad 3 is fixed in the recess 4 in the housing 1.

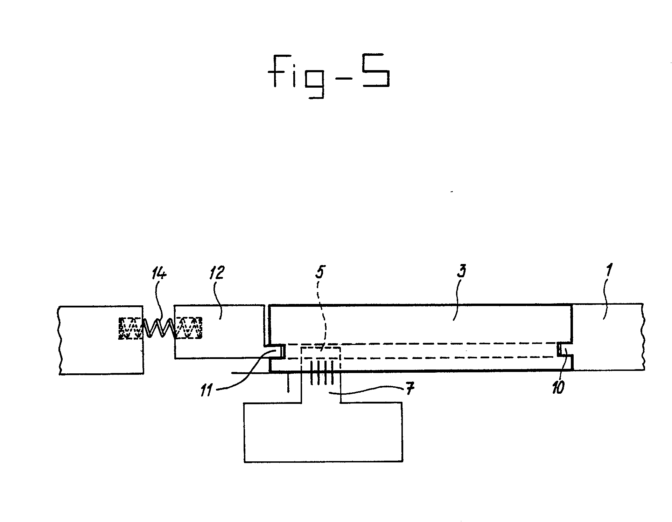

A possible embodiment of the fixing means will be discussed below wit reference to Figs. 4 and 5. The side edge of the keypad 3 is provided with a groove 9 running all the way round. Provided in the recess 4 in the housing 1 are two ridges of such dimensions that they fit into the groove 9., The ridge 10 is directly intergral with the box 1, while the ridge 11 is positioned on a component 12 which, although it forms part of the housing 1, can move relative to the actual box in the direction of the arrow 13, shown in Fig. 4.

During the installation of the keypad 3, starting from the situation shown in Fig. 4, the part of the groove 9 on the righthand side edge of the keypad 3 is first placed on the ridge 10 of the housing 1. The keypad is then slantingly inserted into the recess 4 and, thanks to the ridge 10, which is inserted into part of the groove 9, can as it were pivot about said ridge 10. The lefthand part of the keypad is then pressed downward in this pivoting movement, so that the male connector 5 makes contact with either the female connector 6 or the female connector 7. It is pointed out that, as soon as the said male connectors make contact, the keypad 3 is already in a virtually horizontal position, so that both connectors fit into each of her wihtout twisting. In the last phase of this assembly movement, the locking element 12 with the rib 11 is moved to the left, the keypad 3 is pressed fully into the recess 4 and when the locking element 12 is released, it will move under the influence of the spring 14 to the right, so that the ridge 11 engages within the opposite part of the groove 9, with the result that the keypad 23 is locked in the manner shown in Fig. 5.

It will be clear that the keypad 3 can be fitted in any of the four possible positions in the recess 4 using these locking means.

Although a separate locking element 12 with a separate pressure spring 14 is shown in Fig. 5, it will be clear that the locking element 12 can also be fixed by means of a flexible connecting element to the remainder of the housing 1, this flexible connecting element making it possible to move the locking element 12 in the desired manner slightly to the left and right. If plastic is used for the housing 1, such a design will be known to the average designer. The above-described fixing means are described only by way of example. It will be clear that all kinds of other fixing means can be used, all of them coming within the scope of the invention.

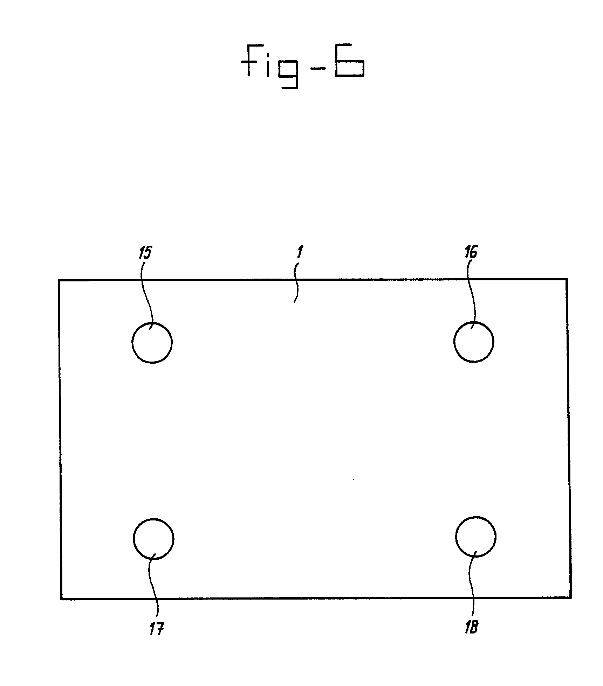

Finally, Fig. 6 shows a bottom view of the housing 1 of the telephone apparatus. As can be seen, four holes or recesses 15, 16, 17, 18 are disposed in the bottom plate. Two feet into two adjacent openings, the apparatus can be placed as desired in a predetermined sloping position, as will be clear.

## Claims

1. Telephone subscriber apparatus provided with a box-shaped housing having an in general rectangular base, four upright side faces, and a top face which is shaped in such a way that the hand microtelephone fits onto said top face in a position parallel and near to the side faces, whereby the receiver switch is depressed, said housing being further provided with a rectangular dialling keypad which is fixed by suitable fixing means in a recess provided for the purpose in the top face of the housing, characterized in that the dialling keypad fits into a square recess in the top face of the housing, and the fixing means are designed in such a way that the keypad can be fixed as desired by the user with the rows of keys parallel to the hand microtelephone, or perpendicular thereto.

2. Telephone subscriber apparatus according to claim 1, characterized in that the connection between the keypad and the telephone circuitry accommodated in the housing is made by means of a male or female connector which is fixed on the keypad and can mate with at least two corresponding, electrically interconnected female respectively male connectors placed inside the said square recess, at such points that one of the said at least two connectors makes contact with the first mentioned connector.

3. Telephone subscriber apparatus according to claim 1, characterized in that the connection between the keypad and the telephone circuitry accommodated in the housing is accomplished by means of a male or female connector which is placed in the recess in the housing and can mate with at least two corresponding, electrically interconnected female respectively male connectors fixed to said keypad at such points that one of said at least two connectors makes contact with the first mentioned connector.

4. Telephone subscriber apparatus according to claim 2 or 3, characterized in that the male connector is located near a corner of the keypad, or the recess in the female connectors is located near at least two adjacent corners of the recess or the keypad.

5. Telephone subscriber apparatus according to claims 2 and 4, characterized in that the connection between the keypad and the telephone circuitry accommodated in the housing is accomplished by means of two electrically interconnected male or female connectors which are placed near two diametrically opposite corners of the keypad and which can mate with two corresponding electrically interconnected female respectively male connectors placed near two adjacent corners of the said square recess.

6. Telephone subscriber apparatus according to claims 3 and 4, characterized in that the connection between the keypad and the telephone circuitry accommodated in the housing is accomplished by means of two electrically interconnected male or female connectors which are placed near two diametrically opposite corners of the square recess, and which can mate with two corresponding electrically interconnected female respectively male connectors placed near two adjacent corners of the keypad.

7. Telephone subscriber apparatus according to one of the preceding claims 2 to 6, characterized in that the fixing means consist of an insert ridge along one side of the keypad, which ridge fits into a groove along the said recess of the housing, in such a way that ridge and groove form a temporary pivot mechanisme, and consist of a ridge along the opposite side of the keypad which is fixed to the housing by means of a snap mechanism.

8. Telephone subscriber apparatus according to one of the preceding claims, characterized in that disposed in the bottom face of the housing are four recesses on the corner points of an imaginary rectangle whose sides run parallel along the sides of the bottom face, while feet of predetermined length can be inserted into two adjacent selected openings in order to place the apparatus in a desired sloping position.

9. Telephone subscriber apparatus according to one of the preceding claims, characterized in that the housing is provided with fixing means for fixing against a vertical face.

# fig-1

# fig-2

fig-3

Fig-4

# Fig-5

# Fig-6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 569 508  (DE BARRIN) <br> * Page 3, line 9 - page 10, line 3; figures * <br> --- | 1,7 | H 04 M    1/02 <br> H 04 M    1/23 |
| A | DE-A-2 355 666  (STANDARD ELEKTRIK LORENZ) <br> * Page 4, line 10 - page 8, line 23; figures * <br> --- | 1 | |
| A | PATENT ABSTRACTS OF JAPAN, vol. 10, no. 175 (E-413)[2231], 20th June 1986; & JP-A-61 26 352 (MATSUSHITA DENKI SANGYO K.K.) 05-02-1986 <br> ----- | 8 | |

TECHNICAL FIELDS
SEARCHED (Int. Cl.4)

H 04 M

The present search report has been drawn up for all claims

| Place of search | Date of completion of the search | Examiner |
|---|---|---|
| THE HAGUE | 15-02-1988 | KEPPENS P.M.R. |